# EUROPÄISCHE PATENTANMELDUNG

(11) **EP 3 147 098 A1**
(43) Veröffentlichungstag der Anmeldung: **29.03.2017**
(21) Anmeldenummer: 16185757.8
(22) Anmeldetag: 25.08.2016
(51) Int. Cl.: B29C 45/27

(54) **SPRITZGIESSDÜSENVORRICHTUNG**

(30) Priorität: 25.09.2015 DE 102015116279
(71) Anmelder: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(57) **Zusammenfassung**

Die Erfindung betrifft eine Spritzgießdüsenvorrichtung (1), mit wenigstens einem Materialrohr (10a, 10b, 10c), wobei sich jedes der Materialrohre (10a, 10b, 10c) in einer Längsrichtung (L) erstreckt, wobei in jedem der Materialrohre (10a, 10b, 10c) ein Strömungskanal (11a) für eine fließfähige Masse (M) ausgebildet ist, wobei jedes der Materialrohre (10a, 10b, 10c) an einem vorderen Ende (12a) des Strömungskanals (11a) eine Düsenspitze (14a, 14b, 14c) mit wenigstens einer Austrittsöffnung (15a) für die fließfähige Masse (M) aufweist, wobei jedes der Materialrohre (10a, 10b, 10c) an einem hinteren Ende (13a) des Strömungskanals (11 a) wenigstens eine Eintrittsöffnung (16a) für die fließfähige Masse (M) aufweist und an einem Verteiler (50) festgelegt ist, und wobei jedes der Materialrohre (10a, 10b, 10c) mit einer Heizvorrichtung (20a, 20b, 20c) beheizt ist. Dabei ist jedes der Materialrohre (10a, 10b, 10c) in einem in Längsrichtung (L) ausgerichteten Abschnitt (A) mit Ausnahme der Heizvorrichtung (20a, 20b, 20c) am Außenumfang kontaktlos angeordnet, wobei der Abschnitt (A) benachbart zum Verteiler (50) angeordnet ist und sich in Richtung des vorderen Endes (12a) erstreckt.

## Beschreibung

Die Erfindung betrifft eine Spritzgießdüsenvorrichtung gemäß dem Oberbegriff von Anspruch 1.

Spritzgießdüsen werden in Spritzgießwerkzeugen eingesetzt, um eine fließfähige Masse bei einer vorgebbaren Temperatur unter hohem Druck einem trennbaren Werkzeugblock (Formnest) zuzuführen. Sie haben gewöhnlich einen Düsenkörper in Form eines Materialrohrs, in dem ein Strömungskanal für die fließfähige Masse ausgebildet ist. Dieser endet in einem Düsenmundstück, das endseitig in das Materialrohr eingesetzt ist und die Austrittsöffnung für den Strömungskanal bildet.

Damit sich die zumeist heiße Masse innerhalb der Düse nicht vorzeitig abkühlt, ist eine elektrische Heizung vorgesehen, welche das Materialrohr bzw. den darin ausgebildeten Strömungskanal konzentrisch umgibt. Dadurch ist es möglich, die fließfähige Masse bis in die Düsenspitze hinein auf einer konstanten Temperatur zu halten. Eine thermische Trennung zwischen dem heißem Gehäuse und dem meist gekühlten Werkzeug sorgt dafür, dass die Düse - insbesondere im Bereich der Düsenspitze - nicht einfriert und gleichzeitig das Werkzeug (Formnest) nicht erwärmt wird. Zur Überwachung der Temperatur verwendet man gewöhnlich einen Temperaturfühler.

Materialrohr und Heizung können als separate Bauelemente ausgeführt sein, wobei die Heizung gemeinsam mit dem Temperaturfühler in einer Ummantelung integriert ist, die umfangsseitig auf das Materialrohr aufgeschoben wird. Man kann die Heizung aber auch in das Materialrohr integrieren, beispielsweise als Rohrheizkörper oder als Rohrschlange, oder man bringt die Heizung stoffschlüssig als Schichtheizung auf dem Materialrohr auf.

Das Materialrohr sitzt meist in einem Gehäuse, das derart mit einer Verteilerplatte im Spritzgießwerkzeug in Verbindung steht, dass der Strömungskanal im Materialrohr mit den Strömungskanälen in der Verteilerplatte in Strömungsverbindung steht. Zwischen dem Materialrohr und dem Gehäuse ist ein Luftspalt zur thermischen Isolation ausgebildet. Für eine stabile Lagerung stützt sich das Gehäuse auf dem vorderen und hinteren Ende des Materialrohrs ab. Das Luftvolumen im Luftspalt ist so weitestgehend abgedichtet. Nachteilhaft sind hierbei entstehende Wärmebrücken an den Kontaktstellen zum Materialrohr. Das Gehäuse wiederum stützt sich an der Verteilerplatte und/oder der Formplatte ab, was den Wärmeabfluss vom Materialrohr auf das Gehäuse noch verstärkt. Dies führt nicht nur zu einem erhöhten Energiebedarf für die Beheizung, sondern auch zu einer thermischen Ungleichverteilung über der Länge des Materialrohrs.

In vielen Anwendungsfällen ist das Gehäuse zweigeteilt ausgebildet, nämlich einem Düsenschaft mit geringer Materialstärke am vorderen Ende des Materialrohrs und einem Düsenkopf am hinteren Ende des Materialrohrs. Der Düsenkopf ist meist deutlich massiver konstruiert als der Schaft und wird daher aus Eisenlegierungen hergestellt. Der Düsenschaft wird zur besseren thermischen Isolation zumindest teilweise aus teurem Titan gefertigt. Damit ist der Wärmeverlust an der Kontaktstelle des Düsenkopfs zum Materialrohr besonders groß. Wärme wird hier an die umgebende Luft und an die Formplatte abgegeben.

Ein weiterer Nachteil dieser herkömmlichen Düsen besteht darin, dass das Gehäuse, insbesondere der Düsenkopf, der Spritzgießdüse relativ viel Platz einnimmt, so dass die Düsenspitzen der einzelnen Spritzgießdüsen nicht besonders dicht nebeneinander positioniert werden können. Die Nestabstände sind relativ groß. In zahlreichen Anwendungsbereichen ist es aber erforderlich, möglichst kleine Nestabstände zu realisieren, um separate Kavitäten gleichzeitig oder kompliziertere Bauteile in geringen Abständen mehrfach anspritzen zu können.

Ein weiterer Nachteil herkömmlicher Düsen besteht darin, dass das Gehäuse aus mehreren Teilen zusammen gesetzt ist, was den Montageaufwand entsprechend erhöht. Oft wird das Materialrohr auch erst beim Montieren des Werkzeugs in das Gehäuse eingebaut, was sich ebenfalls negativ auf den Montageaufwand auswirkt.

Ziel der Erfindung ist es, diese und weitere Nachteile des Standes der Technik zu überwinden und eine Spritzgießdüsenvorrichtung zu schaffen, die auf engstem Raum mehrere Düsenspitzen unterbringt, so dass selbst kleinste Nestabstände realisierbar sind, wobei die Düsenspitzen vorzugsweise einzeln regelbar sind. Die Düse soll eine gleichmäßige Wärmeübergangs- und Temperaturverteilungs-Charakteristik aufweisen. Sie soll ferner einfach und wirtschaftlich herstell- und montierbar sein, wobei auch beim Einbau in ein Spritzgießwerkzeug nur ein geringer Platzbedarf erforderlich sein soll.

Hauptmerkmale der Erfindung sind im kennzeichnenden Teil von Anspruch 1 angegeben. Ausgestaltungen sind Gegenstand der Ansprüche 2 bis 17.

Die Erfindung betrifft eine Spritzgießdüsenvorrichtung mit wenigstens einem Materialrohr, wobei sich jedes der Materialrohre in einer Längsrichtung erstreckt, wobei in jedem der Materialrohre ein Strömungskanal für eine fließfähige Masse ausgebildet ist, wobei jedes der Materialrohre an einem vorderen Ende des Strömungskanals eine Düsenspitze mit wenigstens einer Austrittsöffnung für die fließfähige Masse aufweist, wobei jedes der Materialrohre an einem hinteren Ende des Strömungskanals wenigstens eine Eintrittsöffnung für die fließfähige Masse aufweist und an einem Verteiler festgelegt ist, und wobei jedes der Materialrohre mit einer Heizvorrichtung beheizt ist. Dabei ist jedes der Materialrohre in einem in Längsrichtung ausgerichteten Abschnitt mit Ausnahme der Heizvorrichtung am Außenumfang kontaktlos angeordnet, wobei der Abschnitt benachbart, vorzugsweise angrenzend, zum Verteiler angeordnet ist und sich in Richtung des vorderen Endes erstreckt.

Vorteilhaft hieran ist, dass am Materialrohr keine Wärmebrücken durch andere Bauteile in der Nähe des Verteilers ausgebildet sind. Entsprechend fließt hier wenig Wärme vom Materialrohr ab. Der Energiebedarf zum Betrieb der Heizvorrichtung ist hierdurch geringer und es wird eine gleichmäßigere Temperaturverteilung über die Länge des Materialrohrs erzielt.

Zu den Düsenspitzen zählen Düsenmundstücke mit einer Austrittsöffnung, die einen offenen Anguss ausbildet, Düsenmundstücke mit einer Austrittsöffnung, die mit einer Verschlussnadel verschließbar ist, wobei die letztgenannten Düsenmundstücke optional eine Nadelführung aufweisen, und auch Düsenmundstücke mit hervorstehender, z.B. kegelförmiger, Spitze, wobei die Austrittsöffnung bzw. die Austrittsöffnungen seitlich an oder neben der Spitze angeordnet sind.

Gemäß einer näheren Ausgestaltung der Spritzgießdüsenvorrichtung ist die Heizvorrichtung in dem Abschnitt mit Ausnahme der Materialrohre kontaktlos angeordnet. Entsprechend fließt auch von der Heizvorrichtung im Abschnitt keine Wärme an Bauteile außer dem Materialrohr ab. Ein unbeabsichtigtes Erwärmen von einer gegenüberliegenden Formplatte wird ebenfalls vermieden.

In einer speziellen Ausgestaltung beträgt die Länge des Abschnitts in Längsrichtung wenigstens der Hälfte der Gesamtlänge des Materialrohres in Längsrichtung. Damit ist ein langer Abschnitt thermisch entkoppelt von anderen Bauteilen, sodass wenig Wärme abfließt.

Zwar werden bereits bei Ausgestaltungen mit nur einem einzigen Materialrohr diese positiven Eigenschaften teilweise erzielt. Besonders zum Tragen kommen die Vorteile jedoch, in optionalen Ausgestaltungen, bei denen wenigstens zwei Materialrohre, vorzugsweise wenigstens drei Materialrohre und besonders bevorzugt wenigstens vier Materialrohre vorgesehen sind, insbesondere am Verteiler festgelegt sind. Es können so beliebig viele Materialrohre zusammengefasst werden.

Besonders geeignet ist die Spritzgießdüsenvorrichtung auch bei Ausgestaltungen, bei denen zwischen dem Anschlag und dem vorderen Ende an jedem der Materialrohre eine Werkzeugaufnahme angeordnet ist. Es wird eine leichte Montage erreicht, denn die Materialrohre können erst am Verteiler festgelegt werden, bevor beispielsweise eine nachstehend beschriebene Plateauanordnung angebracht wird.

In einer weiteren optionalen Ausführung ist an dem hinteren Ende an jedem der Materialrohre ein Koppelmittel zum Festlegen des Materialrohrs an dem Verteiler ausgebildet. Vorzugsweise ist das Koppelmittel ein Gewinde, insbesondere ein Außengewinde, oder ein Bajonettmittel. Hiermit wird eine feste und dichte Verbindung ermöglicht.

Ferner trägt optional jedes der Materialrohre umfangseitig ein elektrisches Heizelement der Heizvorrichtung, und die Heizelemente sind im Bereich des Abschnitts mit Ausnahme des Materialrohrs kontaktlos angeordnet. Diese Heizelemente können zur gleichmäßigen Temperierung insbesondere hülsen- oder manschettenförmig ausgebildet sein. Zudem erstrecken sich die Heizelemente bevorzugt von dem vorderen Ende des Materialrohrs bis zur Werkzeugaufnahme oder falls eine solche nicht vorgesehen ist, bis zum Anschlag oder Verteiler am hinteren Ende.

Gemäß einer abweichenden oder ergänzenden Variante weist die Heizvorrichtung jeweils eine Heizpatrone auf. Diese sitzt entweder im Strömungskanal der Materialrohre oder aber sie sind in Längsrichtung in die Wandung der Materialrohre eingeschoben. Mit der ersten Variante ist eine direkte Beheizung der fluiden Masse im Strömungskanal und im Inneren des Materialrohrs möglich. Die zweite Variante erlaubt eine einfache Montage und Austauschbarkeit.

In einer besonderen Ausführungsform der Spritzgießdüsenvorrichtung weist diese eine Plateauanordnung auf, die beabstandet zu jedem der Materialrohre und der Heizvorrichtung angeordnet ist, wobei die Plateauanordnung Abstandshalter aufweist, wobei die Abstandshalter mit einer ersten Seite beabstandet vom Verteiler sowie quer zur Längsachse benachbart zu jedem der Materialrohre und der Heizvorrichtungen angeordnet sind und wobei die Abstandshalter auf einer zweiten Seite mit Abstand benachbart zu jedem der Materialrohre und der Heizvorrichtungen mit dem Verteiler verbunden sind.

Vorteilhaft an einer derartigen Ausgestaltung ist, dass sich der Verteiler über die Plateauanordnung auf einer Formplatte abstützen kann, ohne dass Wärmebrücken durch die Plateauanordnung zwischen dem Materialrohr auf der einen Seite und der Verteilerplatte und der Formplatte auf der anderen Seite ausbildet. Durch die Abstützung werden die Materialrohre korrekt positioniert. Außerdem bildet die Plateauanordnung einen mechanischen Schutz bei der Montage und dem Transport für die Materialrohre und die Heizvorrichtung.

In einer speziellen Ausführungsform sind auf der zweiten Seite der Abstandshalter Befestigungsmittel angeordnet, welche mit Abstand benachbart zu jedem der Materialrohre mit dem Verteiler verbunden sind. Damit müssen die Abstandshalter nicht einteilig mit dem Verteiler gefertigt werden. Außerdem können Materialien mit geringer Wärmeleitfähigkeit eingesetzt werden, insbesondere Titan. Als Befestigungsmittel kommen beispielsweise Außengewinde oder Bajonettmittel in Betracht.

Weiterhin sieht eine spezielle Variante der Spritzgießdüsenvorrichtung vor, dass die Plateauanordnung einen Plateauboden aufweist, der beabstandet zu jedem der Materialrohre und der Heizvorrichtung angeordnet ist, wobei jedes der Materialrohre durch den Plateauboden der Plateauanordnung hindurchragt, und wobei die Abstandshalter auf der ersten Seite mit dem Plateauboden verbunden sind. Damit bildet die Plateauanordnung einen besonders stabilen Podest. Der Plateauboden ist vorzugsweise quer zur Längsrichtung und beabstandet von dem Verteiler, besonders bevorzugt parallel zu dem Verteiler, insbesondere dessen Unterseite, angeordnet.

Durch die Plateauanordnung mit Plateauboden kann außerdem auf einzelne Düsenköpfe zur Halterung von Düsenschäften verzichtet werden. Hierdurch wird eine platzsparende Anordnung mit engen Nestabständen ermöglicht. Bei der Montage können zunächst die Materialrohre an einem Verteiler festgelegt werden, bevor die Plateauanordnung über diese aufgeschoben wird. Schließlich können die Anschlüsse der Heizvorrichtung relativ flexibel in dem Abschnitt (zwischen dem Plateauboden und dem Verteiler) angeordnet werden.

Gemäß einer Ausführungsform der Spritzgießdüsenvorrichtung ist der Plateauboden mit wenigstens zwei, vorzugsweise wenigstens drei, Abstandshaltern der Plateauanordnung verbunden, wobei die Abstandshalter auf der Seite der Eintrittsöffnung angeordnet sind und sich in Längsrichtung erstrecken. Durch eine wenigstens zweibeinige oder dreibeinige Verbindung zu einem Verteiler ist eine stabile Verbindung bereitstellbar, sodass die Düsenschäfte mit definiert breitem Luftspalt über den Materialrohren sitzen. Auch die Abstandshalter als Bestandteil der Plateauanordnung berühren keines der Materialrohre. Grundsätzlich können die Abstandshalter eine beliebige Geometrie aufweisen. Vorzugsweise sind die Abstandshalter jedoch bolzenförmig oder rohrförmig. Damit wird ein schlanker Aufbau erzielt, der wenig Wärme leiten kann. Hierzu sollten die Abstandshalter vorzugsweise einen maximal 50%, vorzugsweise maximal 30% und besonders bevorzugt maximal 20% größeren Durchmesser haben als die Materialrohre. Ein minimaler erforderlicher Durchmesser ergibt sich aus der Anforderung, dass die Abstandshalter den Kräften basierend auf den Einspritzdrücken von bis zu 2000 bar standhalten müssen, weswegen entsprechende Maschinendüsenanlagekräfte vorliegen, um das Formwerkzeug geschlossen halten zu können. In Varianten mit wenigstens vier Materialrohren sind vorzugsweise weniger Abstandshalter vorgesehen als Materialrohre, jedoch so viele, dass die Plateauanordnung statisch stabil ist. Dies reduziert den Montageaufwand und die thermisch leitenden Brücken. Als Befestigungsmittel bietet sich ein Gewinde oder sonstige übliche Verbindungelemente z.B. Bajonett-Verschlüsse oder ähnlich an. Die Bolzen können eine außenseitige Werkzeugaufnahme, z.B. für einen Gabelschlüssel, aufweisen.

Gemäß einer speziellen Ausgestaltung der Spritzgießdüsenvorrichtung ist jedes der Materialrohre mit dem vorderen Ende innerhalb eines Düsenschafts angeordnet und ragt mit dem hinteren Ende sowie dem Anschlag aus einem hinteren Schaftende des Düsenschafts heraus, wobei zwischen dem Materialrohr und dem Düsenschaft ein Luftspalt ausgebildet ist, wobei das Materialrohr am hinteren Schaftende berührungslos zum Düsenschaft ist, und wobei der Plateauboden jeden der Düsenschäfte an deren hinteren Schaftende hält. Damit werden die Materialrohre und außerhalb der Plateauanordnung mechanisch durch die Düsenschäfte geschützt. Zudem bildet der Luftspalt eine thermische Isolierung aus. Es wird eine gute thermische Entkopplung erzielt, sodass im außerhalb des Düsenschafts freistehend angeordneten Bereich des Materialrohrs Wärme nicht so stark abgeleitet wird, wie es bei einem Kontakt mit einem Düsenkopf der Fall wäre. Die Spritzgießdüsenvorrichtung weist hierdurch eine gleichmäßige Wärmeübergangs- und Temperaturverteilungs-Charakteristik auf. Die Plateauanordnung ersetzt also die klassisch eingesetzten Düsenköpfe pro Materialrohr und es verbleibt nur noch der vordere Abschnitt des Düsenschafts. Innerhalb der Plateauanordnung liegen die Materialrohre mit Ihrem Außenumfang mit Ausnahme einer optionalen Heizvorrichtung frei.

Die Düsenschäfte lassen sich vorzugsweise mit dem Plateauboden verbinden und dann in einer Bewegung auf die Materialrohre schieben. Anschließend wird der Plateauboden relativ zum Verteiler festgelegt.

Optional sind die Düsenschäfte jeweils zweiteilig ausgebildet, wobei das vordere Schaftende aus einem ersten Material und das hintere Schaftende aus einem zweiten Material besteht, und wobei das vordere Schaftende an einer Koppelstelle mit dem hinteren Schaftende verbunden ist. Das erste Material besteht bevorzugt aus einem weniger stark wärmeleitenden Metall als das hintere Schaftende. Damit wird ein Wärmetransfer vom Materialrohr auf das vordere Schaftende und die Formplatte reduziert. Das vordere Schaftende besteht besonders bevorzugt aus Titan.

Gemäß einer näheren Ausgestaltung ist vorgesehen, dass auch jedes Heizelement mit einem vorderen Ende innerhalb des Düsenschafts angeordnet ist und mit einem hinteren Ende aus dem hinteren Schaftende des Düsenschafts herausragt, wobei zwischen dem Heizelement und dem Düsenschaft ein Luftspalt ausgebildet ist, und wobei das Heizelement am hinteren Schaftende berührungslos zum Düsenschaft ist.

In Varianten ohne Düsenschaft kann ein Luftspalt optional zwischen einer Angussöffnungswandung in einer Formplatte und dem Materialrohr ausgebildet sein. Vorzugsweise verschließt dann der Plateauboden die Angussöffnung zumindest teilweise.

Besonders stabil ist eine Ausgestaltungsform, nach welcher der Plateauboden und die Abstandshalter einen Käfig ausbilden, welcher die aus den Düsenschäften herausragenden Abschnitte der Materialrohre radial um die Längsrichtung einfasst. Auf diese Weise sind die Materialrohre auch besonders dicht zueinander anordenbar. Bevorzugt betragen die vom Käfig radial um die Längsachse ausgebildeten Freiräume wenigstens 50% vom radialen Umfang des Käfigs.

Die optionale Werkzeugaufnahme ist vorzugsweise außerhalb des Düsenschafts angeordnet. Der Düsenschaft hat so einen kleinen Durchmesser und ermöglicht enge Nestabstände.

Bei einer speziellen Ausgestaltung der Spritzgießdüsenvorrichtung, bei der jedes der Materialrohre mit dem vorderen Ende innerhalb eines Düsenschafts angeordnet ist, ist vorgesehen, dass der Düsenschaft in Richtung hinteres Schaftende über wenigstens zwei Drittel seiner Gesamtlänge berührungslos zum Materialrohr und der Heizvorrichtung ist. Damit wird eine Wärmeübertragung von dem Materialrohr auf den Düsenschaft gering gehalten.

In ganz besonderer Ausgestaltung, bei der jedes der Materialrohre mit dem vorderen Ende innerhalb eines Düsenschafts angeordnet ist, stützt sich der Düsenschaft ausschließlich am vorderen Ende des Materialrohrs mittelbar oder unmittelbar am Materialrohr ab. Es wird so ein besonders langer Luftspalt mit guter thermischer Isolierkraft bereitgestellt, denn eine thermische Brücke zum Materialrohr besteht ausschließlich am vorderen Schaftende.

Ferner ist in einer Variante, bei der jedes der Materialrohre mit dem vorderen Ende innerhalb eines Düsenschafts angeordnet ist, vorgesehen, dass das hintere Schaftende der Düsenschäfte in Längsrichtung beabstandet von dem Verteiler angeordnet ist. Entsprechend ist hier Platz für elektrische Anschlüsse der Heizvorrichtung.

Des Weiteren sieht eine nähere Ausgestaltung der Plateauboden scheibenförmig und quer zur Längsrichtung ausgerichtet ist, wobei der Plateauboden Aufnahmegeometrien aufweist, in denen jeder der Düsenschäfte mit seinem hinteren Schaftende aufgenommen ist. Damit wird der thermische Abfluss von den Düsenschäften auf eine einzige Scheibe geleitet, die wiederum als Bestandteil der Plateauanordnung keines der Materialrohre berührt. Mit dem scheibenförmigen Plateauboden wird auch eine einfache Montage mit wenigen Bauteilen ermöglicht, denn es sind keine Einzelhalter für jeden Düsenschaft erforderlich. Vorzugsweise sind die Aufnahmegeometrien als einzelne Löcher für jeden der Düsenschäfte ausgebildet. Die Düsenschäfte lassen sich so einfach in die Löcher einstecken.

Niedrige Herstellkosten werden erzielt, wenn die Abstandshalter Gleichteile sind und/oder die Materialrohre Gleichteile sind und/oder die Düsenspitzen Gleichteile sind und/oder die Düsenschäfte Gleichteile sind.

Besonders einfach gelingt die Befestigung der Düsenschäfte an der Plateauanordnung in einer optionalen Ausführung, bei welcher der scheibenförmige Plateauboden zwei aufeinandergestapelte Teilscheiben aufweist, und bei der jeder der Düsenschäfte an seinem hinteren Schaftende ein quer zur Längsrichtung abstehendes Haltemittel aufweist, wobei die Haltemittel von jedem der Düsenschäfte zwischen den zwei Teilscheiben eingeklemmt sind. Aus Stabilitätsgründen besonders bevorzugt ist das Haltemittel ein Kragen, insbesondere ein umlaufender Kragen.

Es bietet sich eine Ausgestaltung an, bei welcher die zwei Teilscheiben mit Schrauben zusammengehalten sind. Diese lassen sich einfach und wiederholt montieren. Die Schrauben können optional direkt in die Abstandshalter eingeschraubt werden. Damit verbinden die Schrauben beide Teilplatten und die Abstandshalter.

Zur Reduktion der Wärmeleitung von den Düsenschäften auf die Plateauanordnung, besteht die Option, dass wenigstens eine der zwei Teilscheiben aus Titan oder einer Titanlegierung besteht. Dies sollte insbesondere die Teilscheibe sein, welche zu größerem Anteil mit den Düsenschäften und/oder der Formplatte in Kontakt tritt.

Optional ist jeder Düsenspitze eine Verschlussnadel zugeordnet, mit der die Austrittsöffnung an der Düsenspitze öffenbar und schließbar ist. Damit sind präzise und hochdynamische Abspritzzyklen erreichbar. Außerdem lässt sich der Durchfluss einstellen und bei Bedarf über den Abspritzzyklus modulieren. Die Anordnung ist bevorzugt derart, dass sich jede der Verschlussnadeln in Längsrichtung durch eines der Materialrohre erstreckt.

In einer Variante der Spritzgießdüsenvorrichtung ist der Verteiler ein Verteilerkopf, dessen größte Erstreckung quer zur Längsrichtung in etwa so groß ist wie die größte Erstreckung der Plateauanordnung quer zur Längsrichtung, im Besonderen wie die größte Erstreckung des Plateaubodens, und insbesondere maximal 100% größer als die größte Erstreckung der Plateauanordnung. Der Verteilerkopf sorgt dafür, dass jedes der Materialrohre mit fließfähiger Masse gespeist wird. Hierzu kann der Verteilerkopf wenigstens einen Strömungskanal pro Materialrohr aufweisen. Optional sind sich aufgabelnde Strömungskanäle im Verteilerkopf ausgebildet. Ein solcher Verteilerkopf ist an eine zentrale Maschinendüse oder an eine Verteilerplatte anschließbar.

Eine alternative Ausgestaltung sieht vor, dass der Verteiler eine Verteilerplatte eines Formwerkzeugs ist, deren Erstreckung quer zur Längsrichtung wenigstens doppelt, vorzugsweise wenigstens dreimal so groß ist wie die größte Erstreckung der Plateauanordnung, im Besonderen wie die größte Erstreckung des Plateaubodens. Damit können die Materialrohre also auch unmittelbar im Spritzgießwerkzeug an der Verteilerplatte angeordnet sein. Hierdurch kann eine besonders kompakte Bauform bereitgestellt werden.

Die Verteilerplatte kann in beiden Varianten jeweils mit einer zentralen Maschinendüse verbunden sein. Diese speist insbesondere die Verteilerkanäle in der Verteilerplatte.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Spritzgießdüsenvorrichtung mit Düsenschäften;
- Fig. 2: einen Längsschnitt durch eine Spritzgießdüsenvorrichtung gemäß Fig. 1,
- Fig. 3: eine perspektivische Ansicht einer Spritzgießdüsenvorrichtung ohne Düsenschäfte;
- Fig. 4: einen Längsschnitt durch eine Spritzgießdüsenvorrichtung gemäß Fig. 3; und
- Fig. 5: eine perspektivische Ansicht einer Spritzgießdüsenvorrichtung gemäß Fig. 3 jedoch ohne Plateauboden.

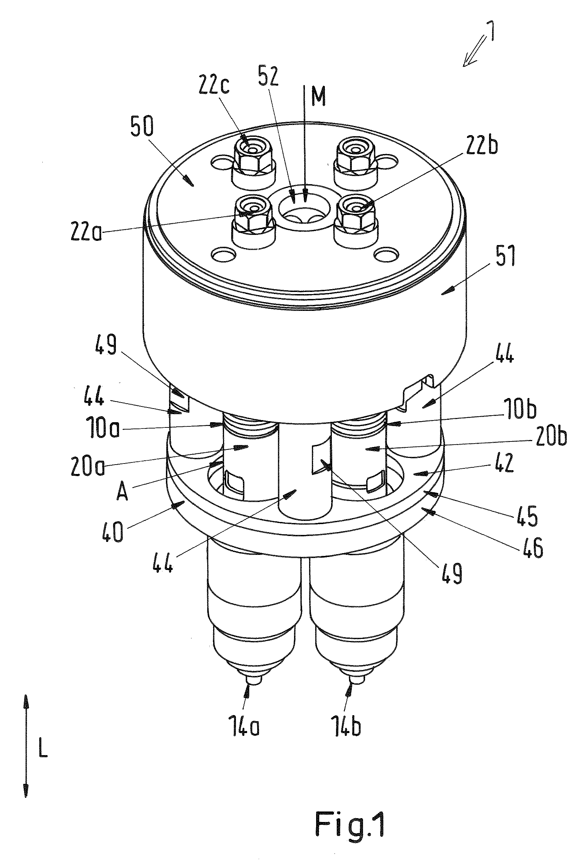

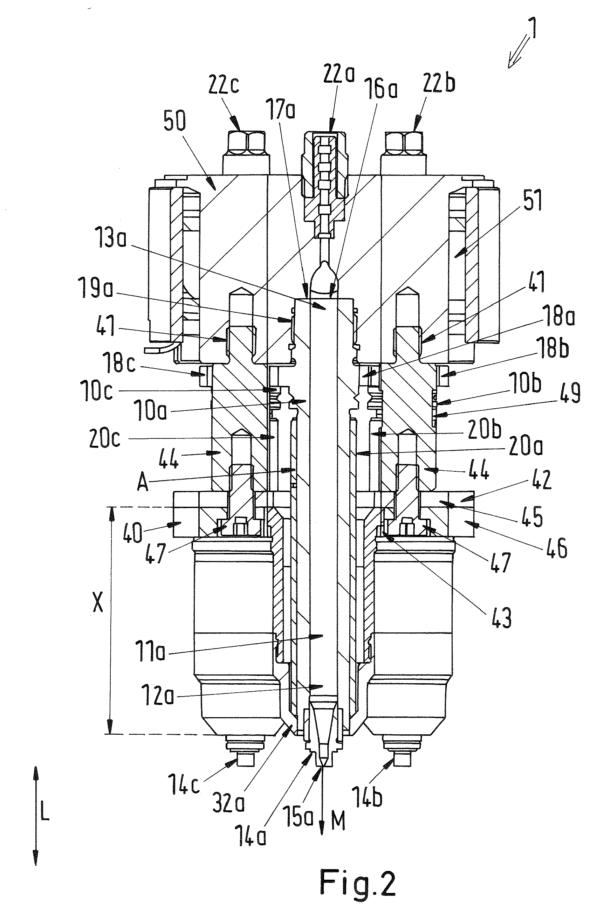

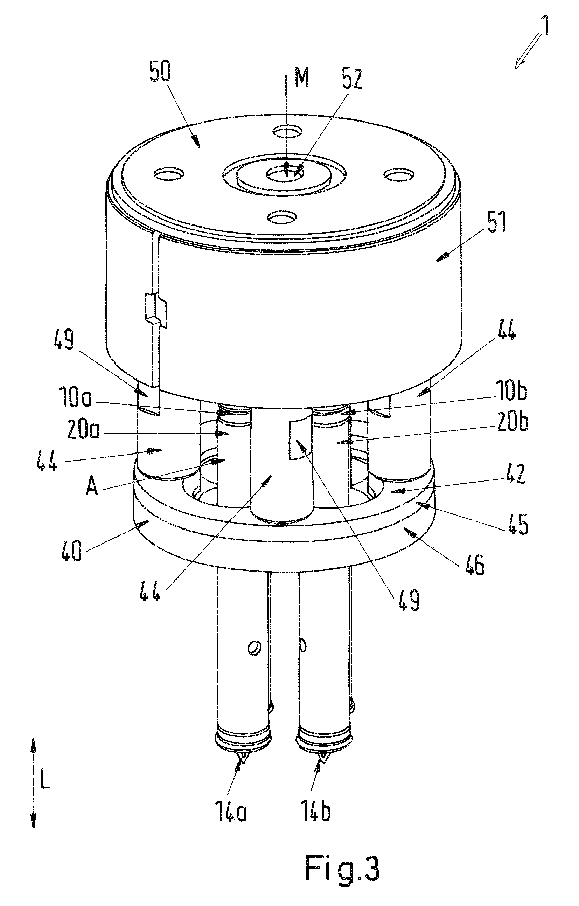

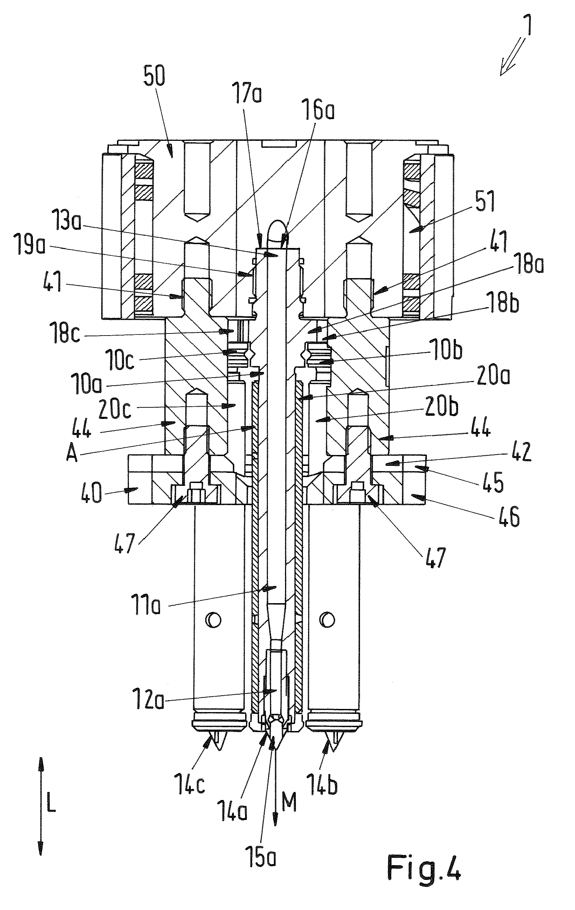

In Fig. 1 ist in perspektivischer Ansicht eine Spritzgießdüsenvorrichtung 1 gezeigt. Fig. 2 umfasst einen Längsschnitt durch die Spritzgießdüsenvorrichtung 1 nach Fig. 1. Gemäß Fig. 3 ist eine andere Spritzgießdüsenvorrichtung 1 gezeigt. In Fig. 4 ist ein Längsschnitt durch die Spritzgießdüsenvorrichtung 1 nach Fig. 3 dargestellt.

Den Ausführungsformen der Fig. 1, 2, 3 und 4 ist gemein, dass die Spritzgießdüsenvorrichtung 1 über vier baugleiche Materialrohre 10a, 10b, 10c verfügt, von denen in den Fig. 1 und 3 zwei und in Fig. 2 und 4 drei sichtbar sind. Jedes der Materialrohre 10a, 10b, 10c erstreckt sich in einer Längsrichtung L, d.h. die Materialrohre 10a, 10b, 10c sind parallel zueinander ausgerichtet. Insbesondere in Fig. 2 und 4 erkennt man, dass in jedem der Materialrohre 10a, 10b, 10c ein Strömungskanal 11 a für eine fließfähige Masse M ausgebildet ist. Weiterhin verfügt jedes der Materialrohre 10a, 10b, 10c an einem vorderen Ende 12a des Strömungskanals 11 a über eine Düsenspitze 14a, 14b, 14c mit wenigstens einer Austrittsöffnung 15a für die fließfähige Masse M. Die Düsenspitzen 14a, 14b, 14c sind alle baugleich. Jedes der Materialrohre 10a, 10b, 10c hat an einem hinteren Ende 13a des Strömungskanals 11 a wenigstens eine Eintrittsöffnung 16a für die fließfähige Masse M sowie einen Anschlag 17a zur definierten Positionierung an dem Verteiler 50. Weiterhin ist jedes der Materialrohre 10a, 10b, 10c mit einer Heizvorrichtung 20a, 20b, 20c beheizt. Hierzu trägt jedes Materialrohr 10a, 10b, 10c umfangseitig ein hülsenförmiges Heizelement. Vorzugsweise handelt es sich hierbei um eine Trägerhülse mit einer Dickschichtheizung. Optional können jedoch auch etwaige andere Heizer eingesetzt werden.

An dem hinteren Ende 13a ist an jedem der Materialrohre 10a, 10b, 10c ein Koppelmittel 19a zum Festlegen des Materialrohrs 10a, 10b, 10c an dem Verteiler 50 ausgebildet. Es handelt sich hier um ein Außengewinde. Zwischen dem Koppelmittel 19a und dem vorderen Ende 12a, insbesondere benachbart zum Koppelmittel 19a ist an jedem der Materialrohre 10a, 10b, 10c eine Werkzeugaufnahme 18a, 18b, 18c angeordnet, um die Koppelmittel 19a in den Verteiler 50 einschrauben zu können.

Aus Fig. 2 geht hervor, dass in der Variante der Fig. 1 und 2 jeder Düsenspitze 14a, 14b, 14c eine Führung für eine Verschlussnadel 22a, 22b, 22c zugeordnet ist, mit der die Austrittsöffnung 15a an der Düsenspitze 14a, 14b, 14c öffenbar und schließbar ist. Die Führungen für die Verschlussnadeln 22a, 22b, 22c erstrecken sich in Längsrichtung L und jeweils durch eines der Materialrohre 10a, 10b, 10c.

Abweichend hierzu ist in der Variante nach den Fig. 3 und 4 eine offene Düsenspitze 14a, 14b, 14c vorgesehen.

Alle Varianten der Fig. 1, 2, 3 und 4 haben gemeinsam, dass jedes der Materialrohre 10a, 10b, 10c in einem in Längsrichtung L ausgerichteten Abschnitt A mit Ausnahme der Heizvorrichtung 20a, 20b, 20c am Außenumfang kontaktlos angeordnet ist, wobei der Abschnitt A benachbart zum Verteiler 50 angeordnet ist und sich in Richtung des vorderen Endes 12a erstreckt. Außerdem sind die Heizelemente der Heizvorrichtung 20a, 20b, 20c in dem Abschnitt A mit Ausnahme der Materialrohre 10a, 10b, 10c kontaktlos angeordnet. Ausgenommen hiervon sind allerdings nicht näher dargestellte Anschlussleitungen, die zu den Heizelementen führen. Man erkennt, dass die Länge des Abschnitts A in Längsrichtung L mehr als der Hälfte der Gesamtlänge des Materialrohres 10a, 10b, 10c in Längsrichtung L beträgt. Der Abschnitt A erstreckt sich jeweils vom Verteiler 50 bis zum vorderen Ende 12a des Materialrohres 10a, 10b, 10c.

Gemein haben die Varianten nach den Fig. 1 und 2 sowie 3 und 4 weiterhin eine Plateauanordnung 40. Die Plateauanordnung 40 ist beabstandet zu jedem der Materialrohre 10a, 10b, 10c und der Heizvorrichtung 20a, 20b, 20c angeordnet. Jedes der Materialrohre 10a, 10b, 10c ragt durch einen scheibenförmigen Plateauboden 42 der Plateauanordnung 40 hindurch. Der Plateauboden 42 ist hierzu quer zur Längsrichtung L ausgerichtet. Außerdem weist die Plateauanordnung 40 Abstandshalter 44 auf. Die baugleichen Abstandshalter 44 sind bolzenförmig und erstrecken sich in Längsrichtung L. Außerdem sind sie auf einer ersten Seite mit dem Plateauboden 42 verbunden. Hierzu ist jeweils eine Schraube 47 pro Abstandshalter 44 durch den Plateauboden 42 geführt und in den Abstandshalter 44 eingeschraubt. Auf der zweiten Seite der Abstandshalter 44 sind die Befestigungsmittel 41 in Form von Außengewinden angeordnet. Umfangsseitig weisen die Abstandshalter 44 jeweils eine Werkzeugaufnahme 49 für einen Gabelschlüssel auf. Optional können auch Werkzeugaufnahmen für andere Werkzeuge ausgebildet sein. Die Plateauanordnung 40 ist mittels der Befestigungsmittel 41 mit dem Verteiler 50 verbunden. Die Abstandshalter 44 sind also auf der Seite des Plateaubodens 42 angeordnet, auf welcher die Eintrittsöffnung 16a liegt.

Auch der Plateauboden 42 und die Abstandshalter 44 als Bestandteile der Plateauanordnung 40 berühren keines der Materialrohre 10a, 10b, 10c und auch nicht die Heizvorrichtung 20a, 20b, 20c.

In der Ausführungsform nach den Fig. 3 und 4 verfügen die einzelnen Materialrohre 10a, 10b, 10c weder über ein Düsenkopf noch ein Düsenschaft. Wesentliche Aufgabe des Plateaubodens 42 ist es hier, eine Abstützung gegenüber einer Formplatte bereitzustellen und die Materialrohre mit der Heizvorrichtung mechanisch zu schützen.

Hierzu bilden der Plateauboden 42 und die Abstandshalter 44 einen Käfig aus, welcher die innenliegenden Abschnitte der Materialrohre 10a, 10b, 10c und Heizvorrichtung 20a, 20b, 20c radial um die Längsrichtung L einfasst. Der Plateauboden 42 ist gewissermaßen der Käfigboden.

In Varianten ohne eine solche Plateauanordnung 40 sind vorzugsweise definierte Anschlagsflächen zwischen einer Verteilerplatte und der Formplatte auszubilden. Diese können dann die Abstützung übernehmen, sodass eine korrekte Positionierung der Düsenspitzen in der Angussöffnung vorliegt.

In den gezeigten Ausführungsbeispielen ist der Verteiler 50 jeweils ein Verteilerkopf, dessen Durchmesser quer zur Längsrichtung L in etwa so groß ist wie der Durchmesser der Plateauanordnung 40, im Besonderen wie der Durchmesser des Plateaubodens 42. Der Verteiler 50 ist mit einer elektrischen Verteilerheizung 51 beheizt, die hier insbesondere umfangsseitig auf den Verteilerkopf aufgesetzt ist. Vorliegend ist eine zentrale Eintrittsöffnung 52 im Verteilerkopf vorgesehen. An diese kann eine Verteilerplatte oder eine zentrale Maschinendüse angeschlossen werden.

Gemäß der Ausführungsform nach den **Fig. 1** **und** **2** ist jedes der Materialrohre 10a, 10b, 10c mit dem vorderen Ende 12a innerhalb eines Düsenschafts 30a, 30b, 30c angeordnet und ragt mit dem hinteren Ende 13a sowie dem Anschlag 17a aus einem hinteren Schaftende 31 a, 31 b, 31 c des Düsenschafts 30a, 30b, 30c heraus. Zwischen dem Materialrohr 10a, 10b, 10c und dem Düsenschaft 30a, 30b, 30c ist ein Luftspalt S1, S2 ausgebildet ist. Außerdem ist das Materialrohr 10a, 10b, 10c am hinteren Schaftende 31 a, 31 b, 31 c berührungslos zum Düsenschaft 30a, 30b, 30c, wobei der Plateauboden 42 jeden der Düsenschäfte 30a, 30b, 30c an deren hinteren Schaftende 31 a, 31 b, 31 c hält. Hierzu sind in dem Plateauboden 42 Aufnahmegeometrien 43 in Form von Löchern ausgebildet, in denen jeder der Düsenschäfte 30a, 30b, 30c mit seinem hinteren Schaftende 31 a, 31 b, 31 c aufgenommen ist.

Wie man sieht, ist der Plateauboden 42 aus zwei aufeinandergestapelten Teilscheiben 45, 46 zusammengesetzt (dies gilt auch für die Ausführung nach Fig. 3 und 4). Die Düsenschäfte 30a, 30b, 30c haben jeweils an ihrem hinteren Schaftende 31 a, 31 b, 31 c ein quer zur Längsrichtung L abstehendes Haltemittel 33a, 33b in Form eines umlaufenden Kragens, das zwischen den zwei Teilscheiben 45, 46 eingeklemmt ist. Hierzu werden die zwei Teilscheiben 45, 46 mit den Schrauben 47 zusammengehalten. Wie man insbesondere in Fig. 2 erkennt, hat die untere Teilscheibe 46 eine größere Kontaktfläche zu den Düsenschäften 30a, 30b, 30c als die obere Teilscheibe 45. Daher ist die untere Teilscheibe 46 aus Titan gefertigt (dies gilt auch für die Ausführung nach Fig. 3 und 4). Hierdurch wird außerdem eine gute thermische Isolation gegenüber einer Formplatte geschaffen.

Des Weiteren ist vor allem in Fig. 1 zu erkennen, dass der Plateauboden 42 und die Abstandshalter 44 einen Käfig ausbilden, welcher die aus den Düsenschäften 30a, 30b, 30c herausragenden Abschnitte der Materialrohre 10a, 10b, 10c und Heizvorrichtung 20a, 20b, 20c radial um die Längsrichtung L einfasst. Der Plateauboden 42 ist gewissermaßen der Käfigboden.

Man erkennt, dass der Düsenschaft 30a, 30b, 30c in Richtung hinteres Schaftende 31 a, 31 b, 31 c über wenigstens zwei Drittel seiner Gesamtlänge X berührungslos zum Materialrohr 10a, 10b, 10c ist. Insbesondere stützt sich der Düsenschaft 30a, 30b, 30c ausschließlich mit einem vorderen Schaftende 32a am vorderen Ende 12a des Materialrohrs 10a, 10b, 10c am Materialrohr 10a, 10b, 10c ab. Das vordere Schaftende 32a besteht aus Titan. Bei den Düsenschäften 30a, 30b, 30c handelt es sich um Gleichteile. Das hintere Schaftende 31 a, 31 b, 31c der Düsenschäfte 30a, 30b, 30c sollte in Längsrichtung L beabstandet von dem Verteiler angeordnet sein.

Die Düsenschäfte 30a, 30b, 30c sind jeweils zweiteilig ausgebildet, wobei das vordere Schaftende 32a aus einem ersten Material und das hintere Schaftende 31 a, 31 b, 31 c aus einem zweiten Material besteht. Das vordere Schaftende 32 ist jeweils an einer Koppelstelle mit dem hinteren Schaftende 31 a, 31 b, 31 c verbunden. Das erste Material besteht aus einem weniger stark wärmeleitenden Metall, hier insbesondere Titan, als das hintere Schaftende.

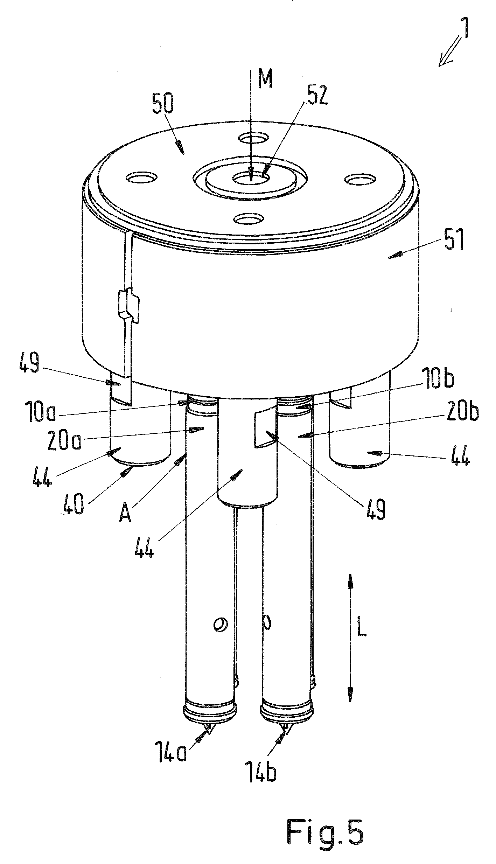

**Fig. 5** zeigt eine perspektivische Ansicht einer Spritzgießdüsenvorrichtung 1, die im Wesentlichen der Ausführungsform nach Fig. 3 entspricht. Die Plateauanordnung 40 weist hier jedoch ausschließlich die Abstandshalter 44 auf. Mit anderen Worten fehlt gegenüber der Ausführungsform der Fig. 3 der Plateauboden 42, dessen zweiteilige Ausführung mit einer ersten und zweiten Teilscheibe 45, 46 sowie die Befestigungsmittel zur Festlegung des Plateaubodens 42 an den Abstandshaltern 44 (siehe Schrauben 47 in Fig. 4). Im Weiteren sei auf die Beschreibung zu Fig. 3 verwiesen.

Die Erfindung ist nicht auf eine der vorbeschriebenen Ausführungsformen beschränkt, sondern in vielfältiger Weise abwandelbar.

Insbesondere kann eine solche Spritzgießdüsenvorrichtung auch mit nur einem bis drei oder mehr als vier Materialrohren 10a, 10b, 10c ausgestaltet sein.

Es ist auch möglich, statt des Verteilers in Form eines kleinen Verteilerkopfes eine komplette Verteilerplatte vorzusehen. Eine Verteilerplatte eines Formwerkzeugs hat meist eine Erstreckung quer zur Längsrichtung L, die wenigstens doppelt so groß ist wie der Durchmesser der Plateauanordnung, im Besonderen wie der Durchmesser des Plateaubodens 42.

Weiterhin besteht die Option, dass der Verteiler 50 mehrere Eintrittsöffnungen 52 aufweisen kann.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Spritzgießdüsenvorrichtung | 22c | Führung für dritte Verschlussnadel |
| | | | |
| 10a | erstes Materialrohr | 30a | erster Düsenschaft |
| 10b | zweites Materialrohr | 30b | zweiter Düsenschaft |
| 10c | drittes Materialrohr | 30c | dritter Düsenschaft |
| 11a | Strömungskanal | | |
| 12a | vorderes Ende (Materialrohr) | 31a | erstes hinteres Schaftende |
| 13a | hinteres Ende (Materialrohr) | 31b | zweites hinteres Schaftende |
| | | 31c | drittes hinteres Schaftende |
| 14a | erste Düsenspitze | | |
| 14b | zweite Düsenspitze | 32a | vorderes Schaftende |
| 14c | dritte Düsenspitze | | |
| | | 40 | Plateauanordnung |
| 15a | Austrittsöffnung | 41 | Befestigungsmittel |
| | | 42 | Plateauboden |
| 16a | Eintrittsöffnung (Strömungskanal) | 43 | Aufnahmegeometrien |
| | | 44 | Abstandshalter |
| 17a | Anschlag | 45 | erste Teilscheibe |
| | | 46 | zweite Teilscheibe |
| 18a | erste Werkzeugaufnahme | 47 | Schraube |
| 18b | zweite Werkzeugaufnahme | | |
| 18c | dritte Werkzeugaufnahme | 50 | Verteiler |
| | | 51 | Verteilerheizung |
| 19a | Koppelmittel | 52 | Eintrittsöffnung |
| | | | |
| 20a | erste Heizvorrichtung | A | Abschnitt |
| 20b | zweite Heizvorrichtung | L | Längsrichtung |
| 20c | dritte Heizvorrichtung | M | fließfähige Masse |
| | | S1 | erster Luftspalt |
| 22a | Führung für erste Verschlussnadel | S2 | zweiter Luftspalt |
| 22b | Führung für zweite Verschlussnadel | X | Gesamtlänge (Düsenschaft) |

## Patentansprüche

1. Spritzgießdüsenvorrichtung (1) mit wenigstens einem Materialrohr (10a, 10b, 10c),
- wobei sich jedes der Materialrohre (10a, 10b, 10c) in einer Längsrichtung (L) erstreckt,
- wobei in jedem der Materialrohre (10a, 10b, 10c) ein Strömungskanal (11a) für eine fließfähige Masse (M) ausgebildet ist,
- wobei jedes der Materialrohre (10a, 10b, 10c) an einem vorderen Ende (12a) des Strömungskanals (11a) eine Düsenspitze (14a, 14b, 14c) mit wenigstens einer Austrittsöffnung (15a) für die fließfähige Masse (M) aufweist,
- wobei jedes der Materialrohre (10a, 10b, 10c) an einem hinteren Ende (13a) des Strömungskanals (11 a) wenigstens eine Eintrittsöffnung (16a) für die fließfähige Masse (M) aufweist und an einem Verteiler (50) festgelegt ist, und
- wobei jedes der Materialrohre (10a, 10b, 10c) mit einer Heizvorrichtung (20a, 20b, 20c) beheizt ist,
**dadurch gekennzeichnet, dass**
- jedes der Materialrohre (10a, 10b, 10c) in einem in Längsrichtung (L) ausgerichteten Abschnitt (A) mit Ausnahme der Heizvorrichtung (20a, 20b, 20c) am Außenumfang kontaktlos angeordnet ist,
- wobei der Abschnitt (A) benachbart zum Verteiler (50) angeordnet ist und sich in Richtung des vorderen Endes (12a) erstreckt.

2. Spritzgießdüsenvorrichtung (1) nach Anspruch 1, **dadurch gekennzeichnet, dass** die Heizvorrichtung (20a, 20b, 20c) in dem Abschnitt (A) mit Ausnahme der Materialrohre (10a, 10b, 10c) kontaktlos angeordnet ist.

3. Spritzgießdüsenvorrichtung (1) nach einem der Ansprüche 1 oder 2, **dadurch gekennzeichnet, dass** die Länge des Abschnitts (A) in Längsrichtung (L) wenigstens der Hälfte der Gesamtlänge des Materialrohres (10a, 10b, 10c) in Längsrichtung (L) beträgt.

4. Spritzgießdüsenvorrichtung (1) nach einem der vorhergehenden Ansprüche, **dadurch gekennzeichnet, dass** wenigstens zwei Materialrohre (10a, 10b, 10c) vorgesehen sind.

5. Spritzgießdüsenvorrichtung (1) nach einem der vorhergehenden Ansprüche, **dadurch gekennzeichnet, dass** zwischen dem Anschlag (17a) und dem vorderen Ende (12a) an jedem der Materialrohre (10a, 10b, 10c) eine Werkzeugaufnahme (18a, 18b, 18c) angeordnet ist.

6. Spritzgießdüsenvorrichtung (1) nach einem der vorhergehenden Ansprüche, **dadurch gekennzeichnet, dass** an dem hinteren Ende (13a) an jedem der Materialrohre (10a, 10b, 10c) ein Koppelmittel (19a) zum Festlegen des Materialrohrs (10a, 10b, 10c) an dem Verteiler (50) ausgebildet ist.

7. Spritzgießdüsenvorrichtung (1) nach einem der vorhergehenden Ansprüche, **dadurch gekennzeichnet, dass** jedes der Materialrohre (10a, 10b, 10c) umfangseitig ein elektrisches Heizelement der Heizvorrichtung (20a, 20b, 20c) trägt, und die Heizelemente im Bereich des Abschnitts (A) mit Ausnahme des Materialrohrs (10a, 10b, 10c) kontaktlos angeordnet sind.

8. Spritzgießdüsenvorrichtung (1) nach einem der vorhergehenden Ansprüche, **dadurch gekennzeichnet, dass** diese eine Plateauanordnung (40) aufweist, die beabstandet zu jedem der Materialrohre (10a, 10b, 10c) und der Heizvorrichtung (20a, 20b, 20c) angeordnet ist, wobei die Plateauanordnung (40) Abstandshalter (44) aufweist, wobei die Abstandshalter (44) mit einer ersten Seite beabstandet vom Verteiler (50) sowie quer zur Längsachse (L) benachbart zu jedem der Materialrohre (10a, 10b, 10c) und der Heizvorrichtungen (20a, 20b, 20c) angeordnet sind und wobei die Abstandshalter (44) auf einer zweiten Seite mit Abstand benachbart zu jedem der Materialrohre (10a, 10b, 10c) und der Heizvorrichtungen (20a, 20b, 20c) mit dem Verteiler (50) verbunden sind.

9. Spritzgießdüsenvorrichtung (1) nach Anspruch 8, **dadurch gekennzeichnet, dass** die Plateauanordnung (40) einen Plateauboden (42) aufweist,
- der beabstandet zu jedem der Materialrohre (10a, 10b, 10c) und der Heizvorrichtung (20a, 20b, 20c) angeordnet ist,
- wobei jedes der Materialrohre (10a, 10b, 10c) durch den Plateauboden (42) der Plateauanordnung (40) hindurchragt,
- wobei die Abstandshalter (44) auf der ersten Seite mit dem Plateauboden (42) verbunden sind.

10. Spritzgießdüsenvorrichtung (1) nach Anspruch 9, **dadurch gekennzeichnet, dass** der Plateauboden (42) mit wenigstens zwei Abstandshaltern (44) der Plateauanordnung (40) verbunden ist, wobei die Abstandshalter (44) auf der Seite der Eintrittsöffnung (16a) angeordnet sind und sich in Längsrichtung (L) erstrecken.

11. Spritzgießdüsenvorrichtung (1) nach einem der Ansprüche 9 oder 10, **dadurch gekennzeichnet, dass**
- jedes der Materialrohre (10a, 10b, 10c) mit dem vorderen Ende (12a) innerhalb eines Düsenschafts (30a, 30b, 30c) angeordnet ist und mit dem hinteren Ende (13a) sowie dem Anschlag (17a) aus einem hinteren Schaftende (31 a, 31 b, 31 c) des Düsenschafts (30a, 30b, 30c) herausragt,
- wobei zwischen dem Materialrohr (10a, 10b, 10c) und dem Düsenschaft (30a, 30b, 30c) ein Luftspalt (S1, S2) ausgebildet ist,
- wobei das Materialrohr (10a, 10b, 10c) am hinteren Schaftende (31 a, 31 b, 31 c) berührungslos zum Düsenschaft (30a, 30b, 30c) ist, und
- wobei der Plateauboden (42) jeden der Düsenschäfte (30a, 30b, 30c) an deren hinteren Schaftende (31a, 31b, 31c) hält.

12. Spritzgießdüsenvorrichtung (1) nach Anspruch 11, **dadurch gekennzeichnet, dass** der Plateauboden (42) und die Abstandshalter (44) einen Käfig ausbilden, welcher die aus den Düsenschäften (30a, 30b, 30c) herausragenden Abschnitte (A) der Materialrohre (10a, 10b, 10c) radial um die Längsrichtung (L) einfasst.

13. Spritzgießdüsenvorrichtung (1) nach einem der Ansprüche 11 oder 12, **dadurch gekennzeichnet, dass** der Düsenschaft (30a, 30b, 30c) in Richtung hinteres Schaftende (31 a, 31 b, 31 c) über wenigstens zwei Drittel seiner Gesamtlänge (X) berührungslos zum Materialrohr (10a, 10b, 10c) und der Heizvorrichtung (20a, 20b, 20c) ist.

14. Spritzgießdüsenvorrichtung (1) nach einem der Ansprüche 11 bis 13, **dadurch gekennzeichnet, dass** sich der Düsenschaft (30a, 30b, 30c) ausschließlich am vorderen Ende (12a) des Materialrohrs (10a, 10b, 10c) mittelbar oder unmittelbar am Materialrohr (10a, 10b, 10c) abstützt.

15. Spritzgießdüsenvorrichtung (1) nach einem der Ansprüche 11 bis 14, **dadurch gekennzeichnet, dass** der Plateauboden (42) scheibenförmig und quer zur Längsrichtung (L) ausgerichtet ist, wobei der Plateauboden (42) Aufnahmegeometrien (43) aufweist, in denen jeder der Düsenschäfte (30a, 30b, 30c) mit seinem hinteren Schaftende (31 a, 31 b, 31 c) aufgenommen ist.

16. Spritzgießdüsenvorrichtung (1) nach einem der Ansprüche 11 bis 15, **dadurch gekennzeichnet, dass** das hintere Schaftende (31 a, 31 b, 31 c) der Düsenschäfte (30a, 30b, 30c) in Längsrichtung (L) beabstandet von dem Verteiler (50) angeordnet ist.

17. Spritzgießdüsenvorrichtung (1) nach einem der Ansprüche 15 oder 16, **dadurch gekennzeichnet, dass** der scheibenförmige Plateauboden (42) zwei aufeinandergestapelte Teilscheiben (45, 46) aufweist, und dass jeder der Düsenschäfte (30a, 30b, 30c) an seinem hinteren Schaftende (31 a, 31 b, 31 c) ein quer zur Längsrichtung (L) abstehendes Haltemittel (33a, 33b) aufweist, wobei die Haltemittel (33a ,33b) von jedem der Düsenschäfte (30a, 30b, 30c) zwischen den zwei Teilscheiben (45, 46) eingeklemmt sind.
